# EUROPÄISCHE PATENTSCHRIFT

(11) **EP 0 496 927 B1**
(45) Veröffentlichungstag und Bekanntmachung des Hinweises auf die Patenterteilung: **08.01.1997**
(21) Anmeldenummer: 91101377.9
(22) Anmeldetag: 01.02.1991
(51) Int. Cl.: H04Q 11/04

(54) **Verfahren für den fehlerbedingten Neustart eines Multiprozessorrechners eines Fernmeldevermittlungssystems**
Procedure for restarting the multiprocessor computer of a telecommunications switching system after a failure
Procédé pour le redémarrage d'un ordinateur à multiprocesseurs d'un système de commutation de télécommunication après une panne

(43) Veröffentlichungstag der Anmeldung: 05.08.1992
(73) Patentinhaber: SIEMENS AKTIENGESELLSCHAFT, 80333 München (DE)
(72) Erfinder: Daniel, Hans-Georg, Dipl.-Ing., W-8000 München 21 (DE); Eggers, Harald, Dr. rer. nat. Dipl.-Math., W-8067 Petershausen (DE); Engelsmann, Karel, Dr. rer. nat. Dipl.-Phys., W-8000 München 70 (DE)

(56) Entgegenhaltungen:
- TELECOM REPORT, Band 4, 1981, Beiheft "Digitalvermittlungssystem EWSD", Seiten 19-27, Berlin, DE; R. BORGER et al.: "Periphere Anschlussgruppen im System EWSD"
- DIGEST PAPERS, 13TH ANNUAL INTERNATIONAL SYMPOSIUM ON FAULT TOLERANT COMPUTING, Milano, 28.-30. Juni 1983, Seiten 388-391, IEEE, New York, US; J.E. ALLERS et al.: "No. 5 ESS-Strategies for reliability in a distributed processing environment"
- N.E.C. RESEARCH & DEVELOPMENT, Nr. 82, Juli 1986, Seiten 68-76, Tokyo, JP; K. MATSUSHITA et al.: "NEAX2400 UMG super-large capacity system"
- CONFERENCE RECORD, NATIONAL TELECOMMUNICATIONS CONFERENCE, New Orleans, Louisiana, 29. November-3. Dezember 1981, Seiten A6.3.1 - A6.3.5, IEEE, New York, US; J.J. DEN OTTER et al.: "DMS=100 system stability and maintainability under heavy traffic"

## Beschreibung

Die Erfindung betrifft ein Verfahren für den fehlerbedingten Neustart eines Multiprozessor-Rechners eines Fernmeldevermittlungssystems, bei dem ein Prozessor aus der Vielzahl seiner Prozessoren sowohl vermittlungstechnische als auch nichtvermittlungstechnische, insbesondere betriebstechnische Aufgaben und die übrigen seiner Prozessoren lediglich vermittlungstechnische Aufgaben durchführen.

Bei Multiprozessorrechnern in dieser Art werden bisher unterschiedliche Kategorien von Anlaufprozeduren angewandt, die sich im Hinblick auf den Umfang des Eingriffs in das bisherige Prozessgeschehen und den Umfang der Teile der Multiprozessorrechnereinheit unterscheiden, die bei dem Vorgang eines solchen Anlaufs einbezogen werden.

Die häufigste Anlaufstufe ist hierbei ein Neustart, bei dem alle zyklischen Prozesse abgebrochen und neu gestartet werden. Bei einem Multiprozessorrechner, bestehend aus einem sogenannten Masterprozessor, der sowohl vermittlungstechnische als auch nichtvermittlungstechnische Aufgaben auszuführen hat, einem sogenannten Spare-Prozessor, der im Fehlerfall für die Übernahme der Aufgaben des Masterprozessors bereitgehalten ist und ggf. darüber hinaus vermittlungstechnische Aufgaben ausführt, sowie aus weiteren Prozessoren, die ausschließlich vermittlungstechnische Aufgaben auszuführen haben, sind hierbei sämtliche dieser Prozessoren mit einbezogen.

Da die Dauer der Initialisierung im Zusammenhang mit Prozessen, die der Vermittlungstechnik dienen, linear von der Anzahl der angeschlossenen Teilnehmer abhängt, entstehen bei Fernsprechvermittlungsstellen mittlerer Größe hierdurch Unterbrechungszeiten von 10 s und mehr, mit der Folge, daß mit solchen Neustarts auch Verbindungsverluste in einem Umfang zu verzeichnen sind, die von den Systembetreibern bei einer solchen relativ häufig auftretenden Art von Neustarts nicht akzeptiert werden.

Die Aufgabe der Erfindung besteht daher darin, ein Verfahren für einen Neustart eines Multiprozessorrechners anzugeben, das unter weitgehend denselben Voraussetzungen für die Durchführung eines Neustarts mit einer geringeren Anzahl von Verbindungsverlusten wenn nicht gar ohne jeglichen Verbindungsverlust auskommt.

Diese Aufgabe wird durch die im Kennzeichen des Patentanspruchs 1 angegebenen Merkmale gelöst.

Demnach erfahren Fehler, die nicht in der Abwicklung vermittlungstechnischer Prozesse liegen, eine Sonderbehandlung, indem für sie eine neue Neustartkategorie geschaffen wird, bei der lediglich die nichtvermittlungstechnischen Prozesse abgebrochen und nach Herstellung eines Anfangszustandes wieder gestartet werden, wogegen die vermittlungstechnischen Prozesse praktisch ohne Unterbrechung weiter abgewickelt werden, wofür entsprechende Voraussetzungen durch so weitgehende Entflechtung der nichtvermittlungstechnischen und der vermittlungstechnischen Prozesse geschaffen werden, daß kurzzeitig auf einen Meldeverkehr zwischen diesen beiden Arten von Prozessen verzichtet werden kann bzw. dafür gesorgt ist, daß Daten, die während der Abwicklung vermittlungstechnischer Prozesse anfallen und für die Verarbeitung durch nichtvermittlungstechnische Prozesse bestimmt sind, durch die während der Unterbrechung der nichtvermittlungstechnischen Prozesse fehlende Möglichkeit eines Meldeverkehrs nicht verloren gehen.

Gemäß einer Ausgestaltung der Erfindung ist dafür gesorgt, daß auch Benutzereingaben, die für die Verarbeitung durch nichtvermittlungstechnische Prozesse bestimmt sind und während der Unterbrechung derselben anfallen, nicht verloren gehen, indem entweder die Benutzer durch eine entsprechende Signalisierung zur Wiederholung der Eingaben aufgefordert werden oder aber indem die Benutzereingaben zwischengespeichert werden.

Eine weitere Ausgestaltung der Erfindung betrifft eine Multiprozessorkonstellation, bei der neben dem sowohl vermittlungstechnische als auch nichtvermittlungstechnische Aufgaben abwickelnden einen Prozessor, dem sogenannten Masterprozessor ein sogenannter Spareprozessor im Standby-Betrieb bereitgehalten ist, der bei einem Hardwarefehler des Masterprozessors dessen Aufgaben übernimmt. Durch die entsprechende Modifizierung des erfindungsgemäßen Verfahrens wird auch der im Zusammenhang mit einer solchen Umschaltung erforderliche Neustart gegenüber den bisherigen Verhältnissen so modifiziert, daß es zu einem möglichst geringen Verlust von Verbindungen kommt. Je nachdem ob eine Betriebsart vorliegt, bei der auf dem bisherigen Standby-Prozessor vermittlungstechnische Prozesse schon gestartet waren oder nicht, werden nach der Umschaltung auf dem neuen Master-Prozessor die vermittlungstechnischen Abläufe praktisch unterbrechungsfrei weiter abgewickelt oder aber neu gestartet, dies jedoch ohne daß eine Initialisierung der zugehörigen Datenbasis erfolgt mit dem Ergebnis, daß auch im letztgenannten Fall die Unterbrechung vermittlungstechnischer Prozesse nur so lange andauert, daß höchstens eine im Aufbau befindliche Verbindung zu Verlust geht.

Nachstehend wird die Erfindung anhand von Ausführungsbeispielen unter Bezugnahme auf eine Zeichnung näher erläutert.
In der Zeichnung zeigen:
FIG 1 das Blockschaltbild eines Multiprozessorrechners, auf den das erfindungsgemäße Verfahren anwendbar ist, die
FIG 2 bis 4 zeigen Zeitdiagramme für verschiedene Ausführungsvarianten des erfindungsgemäßen Verfahrens.

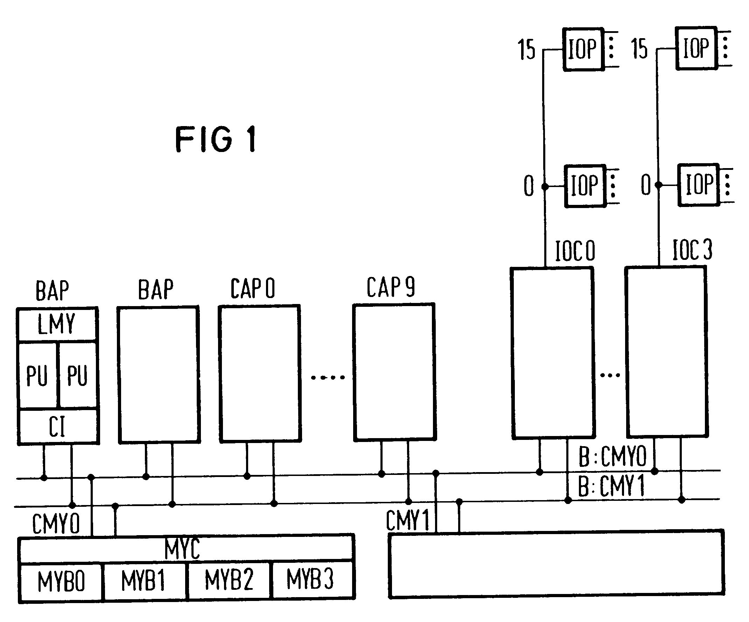

Der in FIG 1 dargestellte Multiprozessorrechner weist zwei Arten von Prozessoren auf, nämlich zwei sogenannte Basisprozessoren BAP, sowie eine Anzahl von Vermittlungsprozessoren CAP0 und CAP9. Daneben sind Eingabe-Ausgabesteuerungen I0C0 bis IOC3 vorhanden.

Sämtliche der genannten Prozessoren bzw. Eingabe- Ausgabesteuerungen weisen einen lokalen Speicher LMY auf, in dem im wesentlichen die dynamisch wichtigen Codeteile sowie einige häufig verwendete, allein dem jeweiligen Prozessor zuzuordnende Daten abgelegt sind, ferner gedoppelte Verarbeitungseinheiten PU, sowie eine Schnittstellenschaltung CI, über die ein Anschluß an einen gedoppelten Bus B:CMY0, B:CMY1 erfolgt. Über diesen Bus haben die Prozessoren Zugriff zu einem ebenfalls gedoppelten gemeinsamen Speicher CMY0, CMY1, dessen beide Hälften jeweils in Speicherbanken MYB0 bis MYB3 gegliedert sind.

Von den beiden Basisprozessoren BAP des dargestellten Mehrprozessorrechners übernimmt der eine, im folgenden als Basisprozessor-Master BAPM bezeichnet, sowohl vermittlungstechnische als auch nichtvermittlungstechnische, also insbesondere betriebstechnische Aufgaben, der andere, nachstehend als Baisprozessor-Spare BAPS bezeichnet, steht als redundanter Prozessor zur Verfügung, um bei einem Ausfall des Basisprozessor-Master BAPM dessen Funktionen zu übernehmen. Bei einer sogenannten Mono-Betriebsart hat der Basisprozessor-Spare BAPS im Standby-Betrieb keine weiteren Aufgaben auszuführen, was bedeutet, daß zwar seine Datenbasis auf dem Stand derjenigen des Basisprozessor-Master BAPM gehalten ist, jedoch keine Prozesse gestartet sind. Im sogenannten Multi-Betrieb wird ein Teil der Bearbeitungskapazität des Basisprozessor-Spare BAPS für die Abwicklung vermittlungstechnischer Aufgaben ausgenutzt.

Die Vermittlungsprozessoren CAP0 bis CAP9 dienen ausschließlich der Abwicklung der Vermittlungstechnik, wobei sie bezüglich der Art und des Umfangs der Abwicklung vermittlungstechnischer Prozesse gleichberechtigt sind.

Die Aufgabe der Eingabe/Ausgabesteuerung IOC ist es schließlich, die Peripherie vom zentralen Bus zu entkoppeln und zu deren Steuerung beizutragen.

Bei den nichtvermittlungstechnischen Prozessen handelt es sich in erster Linie um betriebs- und sicherungstechnische Prozesse, bei den vermittlungstechnischen Prozesse in erster Linie um solche, die mit der Verbindungsherstellung und Auslösen von Verbindungen in Zusammenhang stehen. Im übergeordneten Sinne werden hier jedoch alle diejenigen Prozesse als nichtvermittlungstechnische Prozesse angesehen, die ausschließlich auf dem BAP-Master-Prozessor ablaufen, wogegen unter den vermittlungstechnischen Prozessen alle übrigen Prozesse verstanden werden, also diejenigen, die außer auf dem Basisprozessor-Master BAPM je nach Betriebsart auch auf dem Basisprozessor-Spare BAPS jeweils aber auf allen der Vermittlungsprozessoren CAP ablaufen.

Zwischen den vermittlungstechnischen und den nichtvermittlungstechnischen Prozessen findet normalerweise eine Interprozesskommunikation statt, bei der Meldungen gesendet und empfangen werden bzw. bei der Abwicklung vermittlungstechnischer Prozesse entstehende Daten an die nichtvermittlungstechnischen Prozesse gelangen. Während der Unterbrechung der nicht vermittlungstechnischen Prozesse fallen naturgemäß keine an die vermittlungstechnischen Prozesse gerichtete Meldungen an. Die Meldungen, die aus den vermittlungstechnischen Prozessen stammen und an die nichtvermittlungstechnischen Prozesse gerichtet sind, müssen während der Unterbrechung der nichtvermittlungstechnischen Prozesse gelöscht werden. Voraussetzung dafür, daß die Unterbrechung des Meldeverkehrs in dieser Richtung während der Unterbrechung der nichtvermittlungstechnischen Prozesse nicht zu Störungen führen kann, ist eine entsprechende Entflechtung der vermittlungstechnischen und der nichtvermittlungstechnischen Prozesse.

Daten, die durch den Ablauf vermittlungstechnischer Prozesse entstehen und an die nichtvermittlungstechnischen Prozesse gerichtet sind, werden erfindungsgemäß bis zu einem erneuten Start der nichtvermittlungstechnischen Prozesse zwischengespeichert.

Entsprechend wird mit Daten verfahren, die während der Unterbrechungszeit der nichtvermittlungstechnischen Prozesse aufgrund von Eingaben von den an das Vermittlungssystem angeschlossenen Teilnehmerendgeräten her anfallen.

Alternativ hierzu kann auch durch entsprechende Signalisierung solange eine Wiederholung der Teilnehmerselbsteingaben gefordert werden, bis die Unterbrechung der nichtvermittlungstechnischen Prozesse beendet ist.

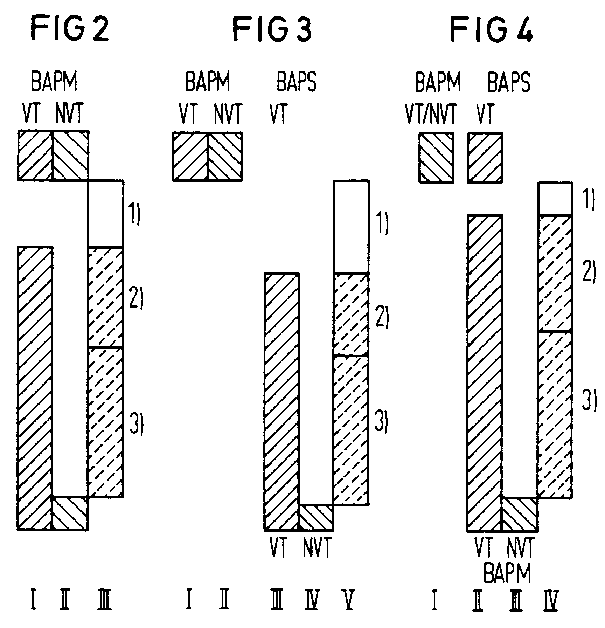

Nachstehend wird anhand der Figuren 2 bis 4 noch näher auf die sich beim erfindungsgemäß durchgeführten Neustart ergebenden Verhältnisse eingegangen.

Die in FIG 2 dargestellten Verhältnisse betreffen einen Neustart aufgrund eines Softwarefehlers, soweit sie auf dem Basisprozessor BAP-Master ablaufen, der, wie dargelegt, sowohl vermittlungstechnische als auch nichtvermittlungstechnische Prozesse abzuwickeln hat.

Die Säule I der FIG 2 gibt hierbei Zeitverhältnisse der vermittlungstechnischen Prozesse wieder, die im Falle eines Neustarts erfindungsgemäß nur kurzzeitig in der Größenordnung 200 ms unterbrochen werden, wobei diese Unterbrechung, im wesentlichen für die Sicherung der Fehlerindizien im Hinblick auf eine Fehlerbehandlung in Anspruch genommen wird (Abschnitt 1) in Säule III).

Diese kurzzeitige Unterbrechung zum Zwecke der Indiziensicherung findet auch bei dem zweiten Basisprozessor-Spare BAPS bzw. den übrigen lediglich vermittlungstechnische Aufgaben abwickelnden Prozessoren CAP0 bis CAP9 statt, sofern der Neustart programmgesteuert veranlaßt wird. Im Falle eines Anstoßes des Neustarts durch ein Kommando eines Bedieners entfällt bei den letztgenannten Prozessoren die Unterbrechung für eine Indiziensicherung.

Wie die Säule II der FIG 2 zeigt, werden die nichtvermittlungstechnischen Prozesse demgegenüber abgebrochen und erst nach Herstellung eines Anfangszustandes erneut gestartet, so daß für diese Prozesse Unterbrechungszeiten in der Größenordnung von über 10 s entstehen. Wie die Säule III in Fig. 2 zeigt, setzt sich diese Unterbrechungszeit neben der ersten auch für die vermittlungstechnischen Prozesse wirksamen Unterbrechung für die Indiziensicherung, Abschnitt 1, aus einer zweiten Zeitspanne, (Abschnitt 2), in der die Betriebsmittelfreigabe für die nicht vermittlungstechnischen Prozesse erfolgt, sowie einer dritten Zeitspanne, Abschnitt 3), zusammen, die für den eigentlichen Neustart der nichtvermittlungstechnischen Prozesse benötigt wird.

In der FIG 3 sind die Verhältnisse dargestellt, die sich bei einem erfindungsgemäßen Neustart im Zusammenhang mit einer durch einen Hardwarefehler bedingten Umschaltung vom Basis-Prozessor-Master BAPM auf den Basis-Prozessor-Spare BAPS ergeben und zwar für den Fall des erwähnten Monobetriebs. Beim Basisprozessor-Master BAP-M wird, wie die Säulen I und II zeigen, die Abwicklung sowohl der vermittlungstechnischen als auch der nichtvermittlungstechnischen Prozesse bleibend abgebrochen, bis der Hardwarefehler behoben ist. Der Weiterlauf der vermittlungstechnischen Prozesse auf dem neuen Basisprozessor-Master kann hier jedoch nicht nach einer gleich kurzen Unterbrechungszeit wie gemäß FIG 1 erfolgen, da der zu den vermittlungstechnischen Prozessen gehörende eigentliche Vermittlungsprozess bei der genannten Betriebsart noch nicht gestartet war. Es wird daher nach einer Zeitspanne, die wie im Falle der FIG 1 der Indiziensicherung dient, ein Kurzstart des genannten eigentlichen Vermittlungsprozesses vorgenommen, ohne jedoch die Datenbasis zu initialisieren, so daß die Unterbrechungszeiten zwei Sekunden nicht überschreiten, siehe Abschnitt 1) der Säule V.

Bis zur Aufnahme der Abwicklung nichtvermittlungstechnischer Prozesse auf dem ehemaligen Basisprozessor-Spare und nunmehrigen Basisprozessor-Master verstreicht auch hier außer der im wesentlichen für die erwähnte Indiziensicherung benötigte Zeitspanne, Abschnitt 1) in Säule V eine Zeitspanne, Abschnitt 2 in Säule V, für die Betriebsmittelfreigabe für die nicht vermittlungstechnischen Prozesse sowie eine Zeitspanne (Abschnitt 3) in Säule V, für den Start der nichtvermittlungstechnischen Prozesse, die beide beträchtlich länger sind, nämlich zusammen in der Größenordnung von 100 s liegen.

In der FIG 4 sind die Zeitverhältnisse bei einem erfindungsgemäß durchgeführten Neustart aufgrund eines Hardwarefehlers des Basisprozessors BAP-M unter der Voraussetzung des vorerwähnten Multibetriebs dargestellt.

Bei einem solchen Multibetrieb laufen auf dem Basisprozessor-Spare BAP-S zum Zeitpunkt einer hardwarebedingten Umschaltung vom Basisprozessor-Master BAP-M auf diesen Basisprozessor-Spare schon vermittlungstechnische Prozesse ab, die ähnlich wie bei den anhand der FIG 1 geschilderten Verhältnissen nach einer lediglich kurzen Unterbrechung, die der Indiziensicherung dient, siehe Säule II in FIG 4, einfach weiterlaufen können. Es sind daher lediglich noch nicht gestartete vermittlungstechnische Prozesse zu starten.

Die nichtvermittlungstechnischen Prozesse hingegen werden im Zuge einer solchen Umschaltung abgebrochen, siehe Säule I der FIG 4 und erst nach einer Freigabe der Betriebsmittel und einem Neustart auf dem neuen Basisprozessor BAPM wieder aufgenommen, wozu entsprechende lange Zeiten wie im Falle der Figur 3 erforderlich sind.

## Patentansprüche

1. Verfahren für den fehlerbedingten Neustart eines Multiprozessorrechners eines Fernmeldevermittlungssystems, bei dem ein Prozessor aus der Vielzahl seiner Prozessoren sowohl vermittlungstechnische als auch nichtvermittlungstechnische, insbesondere betriebstechnische Aufgaben und die übrigen seiner Prozessoren lediglich vermittlungstechnische Aufgaben durchführen,
**dadurch gekennzeichnet**,
daß die im Rahmen der Durchführung dieser Aufgaben abzuwickelnden vermittlungstechnischen und nicht vermittlungstechnischen Prozesse soweit voneinander unabhängig gemacht sind, daß auf einen Meldeverkehr zwischen diesen Prozessen kurzzeitig verzichtet werden kann, und daß aufgrund von Fehlern, die nicht in der Abwicklung vermittlungstechnischer Prozesse liegen, lediglich die nicht vermittlungstechnischen Prozesse abgebrochen und daraufhin nach Herstellung eines Anfangszustandes wieder gestartet werden, wogegen die vermittlungstechnischen Prozesse praktisch ohne Unterbrechung weiter abgewickelt werden, und daß Daten, die währenddessen bei der Abwicklung vermittlungstechnischer Prozesse anfallen und für die Verarbeitung durch nicht vermittlungstechnische Prozesse bestimmt sind, bis zum genannten erneuten Start der nichtvermittlungstechnischen Prozesse zwischengespeichert werden.

2. Verfahren nach Anspruch 1,
**dadurch gekennzeichnet**,
daß durch Benutzereingaben nach Abbruch und erneutem Start der nichtvermittlungstechnischen Abläufe anfallende Daten, die für die Verarbeitung durch die nichtvermittlungstechnischen Abläufe bestimmt sind, verworfen werden, und daß dabei jeweils eine Aufforderung zur Wiederholung dieser Benutzereingaben ergeht.

3. Verfahren nach Anspruch 1,
**dadurch gekennzeichnet**,
daß durch Benutzereingaben nach dem Abbruch und vor dem erneuten Start nichtvermittlungstechnischer Abläufe anfallende Daten, die für die Verarbeitung durch diese nichtvermittlungstechnischen Abläufe bestimmt sind, zwischengespeichert werden.

4. Verfahren nach einem der Ansprüche 1 bis 3 für einen Mutliprozessorrechner, bei dem einer der Prozessoren, der sogenannter Spareprozessor, im Hinblick auf die Übernahme der Aufgaben des sowohl vermittlungstechnische als auch nichtvermittlungstechnische Aufgaben ausführenden Prozessors, des sogenannten Masterprozessors, im Standby-Betrieb bereitgehalten ist, und darüber hinaus vermittlungstechnische Aufgaben ausführt,
**dadurch gekennzeichnet**,
daß nach einer aufgrund eines Hardware-Fehlers beim bisherigen Masterprozessor (BAPM) erfolgten Umschaltung von diesem Prozessor auf den bisherigen Spareprozessor (BAPS) , der daraufhin die Rolle des Masterprozessors übernimmt, lediglich noch nicht gestartete, der Abwicklung vermittlungstechnischer Aufgaben dienende Prozesse neu gestartet werden, dies jedoch ohne eine Initialisierung der zugehörigen Datenbasis.

5. Verfahren nach Anspruch 1 bis 3 für einen Multiprozessorrechner, bei dem einer der Prozessoren, der sogenannte Spareprozessor, im Hinblick auf die Übernahme des sowohl vermittlungstechnische als auch nichtvermittlungstechnische Aufgaben ausführenden Prozessors, des sogenannten Masterprozessors im Standby-Betrieb bereitgehalten ist,
**dadurch gekennzeichnet**,
daß nach einer aufgrund eines Hardwarefehlers beim bisherigen Masterprozessor (BAPM) erfolgten Umschaltung von diesem Prozessor auf den bisherigen Spareprozessor (BAPS), der daraufhin die Rolle des Masterprozessors übernimmt, sämtliche der Abwicklung vermittlungstechnischer Aufgaben dienende Prozesse auf diesem Prozessor jedoch ohne eine Initialisierung der zugehörigen Datenbasis gestartet werden.

## Claims

1. Procedure for restarting a multiprocessor computer of a telecommunications switching tasks system after a failure, in which one processor from the multiplicity of its processors carries out both switching tasks and non-switching, in particular operational tasks and the other of its processors carry out only switching tasks, characterized in that the switching and non-switching processes to be performed in the course of carrying out these tasks are made independent from one another to such an extent that it is possible briefly to do without control traffic between these processes, and in that, in response to failures which do not lie in the performance of switching processes, only the non-switching processes are abnormally terminated and then restarted after establishing an initial status, whereas the switching processes continue to be performed virtually without interruption, and in that data which are generated in the meantime in the performance of switching processes and are intended for processing by non-switching processes are buffer-stored up until the said restart of the non-switching processes.

2. Procedure according to Claim 1, characterized in that data which are generated by user inputs after abnormal termination and restarting of the non-switching sequences and are intended for processing by the non-switching sequences are discarded, and in that in this case a request for repetition of these user inputs is made each time.

3. Procedure according to Claim 1, characterized in that data which are generated by user inputs after the abnormal termination and before the restarting of non-switching sequences and are intended for processing by these non-switching sequences are buffer-stored.

4. Procedure according to one of Claims 1 to 3 for a multiprocessor computer, in which one of the processors, the so-called spare processor, is kept in standby mode with a view to taking over the tasks of the processor executing both switching tasks and non-switching tasks, the so-called master processor, and additionally executes switching tasks, characterized in that, after a switching over, taking place in response to a hardware failure in the case of the existing master processor (BAPM), from this processor to the existing spare processor (BAPS), which thereupon takes over the role of the master processor, only as yet unstarted processors serving for the performance of switching tasks are restarted, but without an initialization of the associated data base.

5. Procedure according to Claims 1 to 3 for a multiprocessor computer, in which one of the processors, the so-called spare processor, is kept in standby mode with a view to taking over the processor executing both switching tasks and non-switching tasks, the so-called master processor, characterized in that, after a switching over, taking place in response to a hardware failure in the case of the existing master processor (BAPM), from this processor to the existing spare processor (BAPS), which thereupon takes over the role of the master processor, all the processes serving for the performance of switching tasks are started on this processor, but without an initialization of the associated database.

## Revendications

1. Procédé pour le redémarrage, après une panne, d'un ordinateur à multiprocesseurs d'un système de commutation de télécommunications dans lequel un processeur parmi le grand nombre de processeurs qu'il comporte exécute aussi bien des taches liées à la commutation que des taches étrangères à la commutation, tout particulièrement des taches relatives à l'exploitation, alors que le reste de ses processeurs n'exécutent que des taches liées à la commutation
**caractérisé par**
le fait que, dans le cadre de l'exécution de ces taches, les processus liés à la commutation et ceux étrangers à la commutation sont rendus indépendants les uns des autres de telle sorte qu'il soit possible de renoncer pendant un court laps de temps à l'échange de messages entre ces processus, et par le fait que, à la suite de dérangements qui ne se situent pas dans le déroulement des processus liés à la commutation, seuls les processus étrangers à la commutation sont interrompus, puis relancés après le rétablissement de l'état initial alors que les processus liés à la commutation continuent à se dérouler pratiquement sans interruption, ainsi que par le fait que les données qui sont créées lors du déroulement des processus liés à la commutation et qui sont destinées à être traitées par les processus étrangers à la commutation, sont stockées dans une mémoire intermédiaire jusqu'au redémarrage des processus étrangers à la commutation cités plus haut.

2. Procédé conforme à la revendication 1
**caractérisé par**
le fait que les données qui sont créées par les entrées des utilisateurs après l'interruption et le redémarrage des opérations étrangères à la commutation et qui sont destinées à un traitement dans le cadre des opérations étrangères à la commutation, sont rejetées et que, dans chaque cas, il se produit une demande de répétition de cette entrée.

3. Procédé conforme à la revendication 1
**caractérisé par**
le fait que les données qui sont créées par les entrées des utilisateurs après l'interruption et le redémarrage des opérations étrangères à la commutation et qui sont destinées à un traitement dans le cadre des opérations étrangères à la commutation, sont stockées dans une mémoire intermédiaire.

4. Procédé conforme à l'une des revendications 1 à 3 pour un ordinateur à multiprocesseurs grâce auquel un des processeurs, le processeur dit "de réserve" est maintenu en service d'attente en ce qui concerne la prise en charge des taches du processeur dit processeur "maître" qui, lui, exécute aussi bien des taches liées à la commutation que des taches étrangères à la commutation, le processeur de réserve étant d'autre part charger d'exécuter des taches liées à la commutation,
**caractérisé par**
le fait que, après un passage provoqué par une panne du matériel apparue sur le processeur qui était jusque-là le processeur maître (BAPM), passage qui fait passer la commande de ce processeur sur le processeur qui était jusque-là le processeur de réserve (BAPS) lequel prend à partir de ce moment la fonction de processeur maître, seuls des processus non encore commencés servant à l'exécution de taches liées à la commutation sont relancés, ceci cependant sans initialisation de la base de données correspondante.

5. Procédé conforme aux revendications 1 à 3 pour un ordinateur à multiprocesseurs grâce auquel un des processeurs, le processeur dit "de réserve" est maintenu en service d'attente en ce qui concerne la prise en charge des taches du processeur dit processeur "maître"
**caractérisé par**
le fait que, après un passage provoqué par une panne du matériel apparue sur le processeur qui était jusque-là le processeur maître (BAPM), passage qui fait passer la commande de ce processeur sur le processeur qui était jusque-là le processeur de réserve (BAPS) lequel prend à partir de ce moment la fonction de processeur maître, tous les processus servant à l'exécution de taches liées à la commutation sont démarrés sur ce processeur, ceci cependant sans initialisation de la base de données correspondante.
